# EUROPEAN PATENT SPECIFICATION

(11) **EP 2 609 249 B1**
(45) Date of publication and mention of the grant of the patent: **07.10.2015**
(21) Application number: 11746260.6
(22) Date of filing: 23.08.2011
(51) Int. Cl.: D21C 5/02, D21C 9/08, D21D 5/18, D21H 21/02, D21B 1/02

(54) **PROCESS FOR THE TREATMENT OF A PAPER PULP**
VERFAHREN ZUR BEHANDLUNG VON PAPIERZELLSTOFF
PROCÉDÉ POUR LE TRAITEMENT DE PÂTE À PAPIER

(30) Priority: 12.10.2010 US 392204 P; 24.08.2010 FR 1003429
(43) Date of publication of application: 03.07.2013
(73) Proprietor: Imerys Talc Europe, 31100 Toulouse (FR)
(72) Inventor: HAWKEN, Albert, F-81600 Tecou (FR); BIZA, Peter, F-31170 Tournefeuille (FR)
(74) Representative: Cabinet BARRE LAFORGUE & associés
(86) International application number: PCT/EP2011/064489
(87) International publication number: WO 2012/025538

(56) References cited:
- US-A- 3 635 788
- US-A- 5 340 439
- US-A- 5 540 814
- US-A1- 2004 065 419
- US-A1- 2006 048 908
- US-B1- 6 245 195

## Description

The invention relates to a process for the treatment of a paper pulp composition, named paper pulp, comprising lignocellulosic materials in an aqueous medium.

Throughout the text "lignocellulosic material" denotes any material comprising carbohydrates (cellulosic fibres) and phenolic substances (essentially lignin).

Throughout the text "median diameter D₅₀" of a distribution of particles, especially talc particles, denotes a diameter such that the size of 50 wt.% of the particles is below said diameter. For non-spherical particles the size represents the equivalent spherical diameter (Stokes diameter). All the measurements of median diameters are made by gravity sedimentation in accordance with standard AFNOR X11-683 using an apparatus named a SediGraph^{®}.

Among the fillers and/or pigments that can be added to paper pulp, talc is used as an additive for controlling the reactivity of the organic compounds originating from the resins of the lignocellulosic materials often present in paper pulp. These organic compounds originating from the resins of the lignocellulosic materials, denoted by the papermaking term "pitch", can actually accumulate in the form of very sticky deposits in the papermaking plants and give rise to serious production problems as well as reductions in the quality of the papers obtained.

The problem of the presence of contaminating particles (or "contaminants") of a sticky nature arises again, even more acutely, in the paper recycling field as contaminants of diverse origins are present in paper pulps prepared from recycled papers. Examples of such contaminants are those originating from binders used in paper coating compositions, resins, sizes, polymeric materials or paraffin waxes. These contaminants, the majority of which are organophilic, are generally sticky and liable to interfere with the operation of the paper machines as well as with the quality of the papers obtained, due to accumulation in the form of agglomerates.

Now, paper recycling is more and more widely used and requires the ability to produce papers of a quality equivalent to that of paper prepared from "virgin" pulp (not prepared from recycled paper). Apart from preserving forests, paper recycling makes it possible to reduce energy consumption by 28 to 70% compared with the production of virgin paper. Also, processes for the production of recycled paper require the use of much less water than conventional papermaking processes.

To mitigate the problems associated with the stickiness of these contaminants, it has been proposed to add talc to the paper pulp. By virtue of its hydrophobic nature, talc is in fact suitable for covering the surface of the contaminants present in paper pulp, particularly paper pulp prepared at least partially from recycled paper. As a result, the stickiness of these contaminants is reduced.

However, this mode of action in which the contaminants are covered or coated with talc remains limited and does not enable all the contaminants present in a paper pulp, particularly a paper pulp prepared from recycled paper, to be neutralized.

Methods of treatment aiming at removing the contaminants present in paper pulps prepared from recycled paper have also been proposed. Centrifugal separators such as hydrocyclones are used to separate off some of the contaminants present in paper pulp. This technique for decontaminating paper pulp is limited by the density of the contaminants, which is generally less than 1 and hence less than that of water. Talc makes it possible to densify these contaminants and facilitate their separation from the paper pulp by means of hydrocyclones.

US 2004/0065419 proposes the use of a cationized talc to form contaminant/cationized talc complexes that are denser than the contaminants alone, enabling these contaminants to be separated off by passage through a hydrocyclone.

However, the chemical treatment of mineral fillers with additives such as cationic polymers substantially increases the price of these fillers, and their efficacy for treating paper pulp as regards the organic contaminants present therein, particularly paper pulp prepared from recycled paper, remains limited.

It has further been proposed to treat a paper pulp containing contaminants by a process, called flotation process, which consists in passing air bubbles into the paper pulp, the contaminants of a hydrophobic nature being entrained towards the surface by the air bubbles since they have a greater affinity for air than for the other components of the paper pulp. The contaminants thus accumulate on the surface of the paper pulp together with the air bubbles and can be removed, e.g. by overflow or by suction.

However, such a flotation process generally requires the use of numerous chemical additives like surfactants, and its efficacy for treating paper pulp as regards the organic contaminants present therein, and especially for removing them, again remains limited.

One aim of the invention is to improve the treatment of the contaminants present in a paper pulp by proposing a process that makes it possible to treat a paper pulp containing contaminants of a sticky nature and to obtain both a better separation of the contaminants present in the paper pulp and an effective neutralization of the contaminants remaining in the paper pulp after a step of separation of the contaminants from the paper pulp, e.g. by passage through a centrifugation device such as a hydrocyclone, without needing to use lamellar silicate that has undergone a chemical treatment such as cationization.

One aim of the invention is therefore to propose a process for the treatment of a paper pulp which makes it possible both to remove the majority of the contaminants present in the paper pulp and to prevent the remaining contaminants from interfering with the operation of the paper machines and the quality of the paper produced.

Another aim of the invention is to propose a simple process that is easy to carry out in any factory for the production of any type of paper.

Another aim of the invention is to propose a process for the treatment of a paper pulp which makes it possible to treat the contaminants present in the paper pulp, irrespective of their size, especially those with a size of between 0.5 µm and 10 mm, particularly of between 10 µm and 2 mm. Thus, specifically, a process according to the invention for the treatment of a paper pulp makes it possible to treat both contaminants with a size of more than 100 µm, also called "macrostickies", and contaminants with a size of less than 100 µm, or even of less than 10 µm, also called "microstickies".

In order to do this, the invention relates to a process according to claim 1.

The inventors found, against all expectation, that the addition, to a paper pulp, of a composition of particles of lamellar silicate comprising such a fine fraction and such a coarse fraction, before subjecting the paper pulp to a step of separation of the contaminants, has considerable advantages and a surprising efficacy. In particular, the addition of such a composition of particles of lamellar silicate to a paper pulp comprising contaminants, in a process according to the invention, makes it possible not only to dispense with the use of particles of lamellar silicate which have undergone a chemical treatment such as cationization, but also considerably to improve the removal and "neutralization" of these contaminants.

Throughout the text, "neutralization" denotes the phenomenon that consists in preventing the presence of the contaminants from interfering with the operation of the paper machines and from harming the quality of the paper produced, the particles of lamellar silicate, particularly talc, at least partially coating the outer surface of the contaminants.

A process according to the invention affords on the one hand an improved removal of the contaminants, in a step of separation of the contaminants from the paper pulp, by virtue of a phenomenon of densification of the contaminants by the particles of lamellar silicate, and on the other hand a "neutralization" of the remaining contaminants.

The step of separation of the contaminating particles from the treated paper pulp can consist of any technique suitable for performing such a separation of a composition loaded with contaminants from a contaminated paper pulp. For example, it can be a separation technique based on a difference in density between the contaminating particles and the other components of the paper pulp.

Advantageously and according to the invention, said step of separation comprises at least one step of centrifugation of said paper pulp.

Thus, in a first embodiment of a process according to the invention, the invention relates more particularly to a. process for the treatment of a paper pulp composition, named paper pulp, comprising lignocellulosic materials in an aqueous medium, wherein:
- in a first step, a composition of particles of lamellar silicate is added to said paper pulp,
- in a second step, said paper pulp is passed through a centrifugation device chosen so as to separate, at least partially, a composition loaded with contaminants from said paper pulp,
characterized in that said composition of particles of lamellar silicate comprises:
- at least 20 wt.% of a first fraction of particles of lamellar silicate, named fine fraction, whose particles of lamellar silicate have an equivalent spherical diameter of between 0.5 µm and 7 µm, and
- at least 20 wt.% of a second fraction of particles of lamellar silicate, named coarse fraction, whose particles of lamellar silicate have an equivalent spherical diameter of between 7 µm and 30 µm.

The inventors found, against all expectation, that the addition, to a paper pulp, of a composition of particles of lamellar silicate, particularly a composition of talc particles, comprising at least 20 wt.% of such a fine fraction and at least 20 wt.% of such a coarse fraction, upstream of a centrifugation device, has considerable advantages and a surprising efficacy. In particular, the addition of such a composition of particles of lamellar silicate to a paper pulp comprising contaminants, in a process according to the invention, makes it possible not only to dispense with the use of particles of lamellar silicate which have undergone a chemical treatment such as cationization, but also considerably to improve the removal and "neutralization" of these contaminants.

A process according to the invention affords both an improved removal of the contaminants, on passage through a centrifugation device, by virtue of a phenomenon of densification of the contaminants by the particles of lamellar silicate, and a "neutralization" of the remaining contaminants.

In a second embodiment of a process according to the invention, said step of separation comprises at least one step, named flotation step, during which the paper pulp is aerated by the introduction of air bubbles so as to allow the formation, on the surface of the paper pulp, of a composition loaded with contaminants. In fact, the inventors found, surprisingly, that the addition, to a paper pulp, of a composition of particles of lamellar silicate comprising a fine fraction and a coarse fraction, before subjecting the paper pulp to such a flotation step, makes it possible considerably to improve the removal and "neutralization" of these contaminants.

A paper pulp employed in a process according to the invention can be used to prepare and produce all types of papers, e.g. office papers, magazine papers or newspapers, cardstocks, cardboards or sanitary papers such as handkerchiefs, paper napkins or toilet paper.

The size distribution of particles of lamellar silicate, particularly talc particles, contained in a composition of particles of lamellar silicate used in a process according to the invention can be represented by a size distribution curve with the size (mean diameter or equivalent spherical diameter) of the particles of lamellar silicate on the abscissa and the percentage by weight or number on the ordinate. The mean diameter (Dₘₑₐₙ) corresponds to the mean dimension of the particles of a powder and can be obtained by the wet Malvern laser diffraction method of particle sizing in accordance with standard AFNOR NFX-666.

The envelope curve of size distribution of the particles of lamellar silicates, particularly talc particles, contained in a composition of lamellar silicates added to a paper pulp in a process according to the invention can have a variety of shapes. For example, the envelope curve of size distribution of said particles of lamellar silicates, particularly talc particles, obtained by sedimentation using a SediGraph^{®} can have the shape of a broadened Gaussian curve extending e.g. between 2 µm and 9 µm, between 4 µm and 12 µm or between 3 µm and 11 µm. In another embodiment according to the invention, the envelope curve of size distribution of said particles of lamellar silicate, particularly talc particles, obtained by sedimentation using a SediGraph^{®} exhibits several distinct peaks, e.g. three peaks with equivalent spherical diameters of 2 µm, 6 µm and 11 µm respectively. In particular, advantageously and according to the invention, the envelope curve of size distribution of said particles of lamellar silicate, particularly talc particles, obtained by sedimentation using a SediGraph^{®} exhibits a bimodal particle size distribution.

Throughout the text, "envelope curve of particle size distribution" denotes the curve of size distribution of all the particles of lamellar silicate contained in a composition of particles of lamellar silicate, particularly of a composition of talc particles, used in a process according to the invention. In the case of a composition of particles of lamellar silicate, particularly a composition of talc particles, exhibiting a unimodal particle size distribution, the envelope curve of particle size distribution is the same as the one and only particle size distribution curve. In the case of a composition of particles of lamellar silicate, particularly a composition of talc particles, exhibiting a plurimodal particle size distribution, the envelope curve of particle size distribution corresponds to the curve enveloping all the particle size distribution curves of each of the different populations of particles contained in said composition of particles of lamellar silicate.

A process according to the invention makes it possible to treat all types of contaminants present in paper pulp, irrespective of their chemical nature, their origin in the papermaking process, or their size. A process according to the invention makes it possible in particular to treat (by removal on passage through a centrifugation device and/or by "neutralization") contaminants with a size of more than 100 µm and contaminants with a size of less than 100 µm, or even of less than 10 µm. In addition, a process according to the invention makes it possible to treat any type of contaminants, especially organic contaminants of a sticky nature, originating from the resins of the lignocellulosic materials or from the compounds contained in recycled papers that may have been added to the paper pulp, it being possible for these contaminants to originate e.g. from binders used in paper coating compositions, resins, sizes, polymeric materials or paraffin waxes.

Passing the paper pulp to which has been added the composition of particles of lamellar silicate, particularly a composition of talc particles, corresponding to a composition of particles of lamellar silicate used in a process according to the invention, through a centrifugation device, particularly a hydrocyclone, or through a flotation device, makes it possible to obtain on the one hand a composition loaded with contaminants and on the other hand a decontaminated paper pulp composition.

The composition loaded with contaminants comprises contaminants whose outer surface is at least partially covered with particles of lamellar silicate, particularly talc particles, as well as particles of lamellar silicate, particularly talc particles, that are not associated with the contaminants, the equivalent spherical diameter of which is substantially greater than 7 µm. Thus, the free particles of lamellar silicate, i.e. those that are in suspension in the paper pulp and are not coating the contaminants, particularly those whose equivalent spherical diameter is substantially greater than 7 µm, are advantageously removed during a step of separation, e.g. by passage of the paper pulp through a centrifugation device, for example a hydrocyclone.

Advantageously and according to the invention, the decontaminated paper pulp recovered after passage through a centrifugation device, particularly a hydrocyclone, or after a step of separation by flotation, contains no particles of lamellar silicate, particularly talc particle, whose size would be such that the presence of these particles could affect the quality of the paper produced, especially no particle of lamellar silicate, particularly talc particle, whose equivalent spherical diameter is substantially greater than 7 µm.

Said decontaminated paper pulp recovered after passage through a centrifugation device, particularly a hydrocyclone, or after a step of separation by flotation, comprises lignocellulosic materials in an aqueous medium in a proportion substantially identical to that in the contaminated paper pulp to be treated, i.e. comprises a proportion of solids substantially equal to the proportion of solids in the initial paper pulp comprising contaminants.

After passage through a centrifugation device, or after a separation step by flotation, said recovered decontaminated paper pulp contains only some of the contaminants initially present in the paper pulp, particularly the smallest contaminants and more particularly those with a diameter substantially smaller than 7 µm.

A composition of particles of lamellar silicate added to a paper pulp, in a first step of a process according to the invention, can have a particle size distribution such that the envelope curve of size distribution of said particles of lamellar silicate, obtained by sedimentation using a SediGraph^{®}, extends at least between 3 µm and 11 µm, especially at least between 1 µm and 15 µm and particularly at least between 0.5 µm and 20 µm.

A composition of particles of lamellar silicate, particularly a composition of talc particles, added to a paper pulp in a process according to the invention thus has a so-called non-monodisperse particle size distribution, i.e. the particles of lamellar silicate are not all substantially of the same size. Notably, the particle size distribution of such a composition of particles of lamellar silicate, particularly a composition of talc particles, can have a specific particle size dispersion.

The composition of particles of lamellar silicate used in a process according to the invention can have a plurimodal particle size distribution, particularly a bimodal particle size distribution.

Advantageously, in one embodiment of a process according to the invention, said composition of particles of lamellar silicate, particularly talc particles, added to the paper pulp is obtained by combining at least two fractions of particles of lamellar silicate of different median diameters D₅₀. A composition of particles of lamellar silicate, particularly a composition of talc particles, used in a process according to the invention can be obtained by mixing two fractions of particles of lamellar silicate using any powder conveying system and/or any powder mixing system suitable for preparing a composition of particles of lamellar silicate used in a process according to the invention. For example, it is possible to use two compressed air conveyors discharging into the same container, or a fluidized zone mixer.

Said fine and coarse fractions contained in the composition of particles of lamellar silicate have particle size distributions that are adapted to the contaminated paper pulp to be treated. Advantageously and according to the invention, said fine fraction has a median diameter D₅₀ of between 0.5 µm and 6 µm, in particular substantially equal to 3 µm. Advantageously and according to the invention, said coarse fraction has a median diameter D₅₀ of between 8 µm and 15 µm, in particular substantially equal to 11 µm.

In particular, in a first step of a process according to the invention, a composition of particles of lamellar silicate comprising a first fraction of particles of lamellar silicate, named fine fraction, whose median diameter D₅₀ is substantially equal to 3 µm, and a second fraction of particles of lamellar silicate, named coarse fraction, whose median diameter D₅₀ is substantially equal to 11 µm, is added to said paper pulp.

The quantity of particles of lamellar silicate, particularly of talc particles, whose equivalent spherical diameter is between 0.5 µm and 7 µm (fine fraction) and the quantity of particles of lamellar silicate, particularly talc particles, whose equivalent spherical diameter is between 7 µm and 30 µm (coarse fraction), contained in said composition of particles of lamellar silicate, are adapted to the quantity, nature and size of the contaminants present in the paper pulp to be treated. Advantageously and according to the invention, said fine fraction and said coarse fraction each represent between 20 wt.% and 80 wt.%, especially between 25 wt.% and 75 wt.%, particularly between 40 wt.% and 60 wt.% and more particularly 50 wt.% of the composition of particles of lamellar silicate.

In addition to said fine fraction and said coarse fraction, a composition of particles of lamellar silicate used in a process according to the invention can also comprise particles of lamellar silicate, particularly talc particles, whose equivalent spherical diameter is between 30 µm and 60 µm. Advantageously, a composition of particles of lamellar silicate used in a process according to the invention comprises less than 20 wt.%, especially less than 10 wt.%, of particles of lamellar silicate, particularly talc particles, whose equivalent spherical diameter is between 30 µm and 60 µm, based on the total weight of said composition of particles of lamellar silicate.

The quantity of composition of particles of lamellar silicate added to the paper pulp is adapted to the concentration and nature of the contaminants to be treated that are present in said paper pulp. Advantageously and according to the invention, in a first step, between 0.1 wt.% and 20 wt.%, especially between 0.5 wt.% and 7 wt.% and particularly between 1 wt.% and 5 wt.% of said composition of particles of lamellar silicate is added to said paper pulp, based on the total dry weight of said paper pulp.

A centrifugation device used in a process according to the invention is chosen so as to separate off the solid particles contained in the paper pulp which are denser than the fluid forming the paper pulp. Advantageously and according to the invention, the centrifugation device used is a hydrocyclone.

A hydrocyclone that is usable in a process according to the invention can be formed of a conical section prolonged by an exit tube; the paper pulp introduced into the hydrocyclone forms a primary vortex that descends under pressure. As the diameter of the cone decreases, a secondary vortex forms and heads upwards through the centre of the hydrocyclone. A hydrocyclone used in a process according to the invention can have any shapes or dimensions suitable for separating the treated contaminated paper pulp into a decontaminated paper pulp and a composition loaded with contaminants.

During passage through the hydrocyclone, the densest particles of contaminants are thrown against the walls of the hydrocyclone by the centrifugal forces and are discharged through the exit tube. The decontaminated paper pulp rises through the secondary vortex and is discharged to the outside.

In one process according to the invention, the step of separation by flotation can be carried out in any device for mixing and aerating the treated paper pulp. For example, it can be a flotation cell equipped with a device for mixing and dispersing air bubbles into the paper pulp. Such a flotation cell can also comprise a rotary device for removing the composition loaded with contaminants from the surface of the paper pulp.

The composition of particles of lamellar silicate can comprise talc, kaolin, mica and/or chlorites. The lamellar silicates used to prepare said composition of particles of lamellar silicate can be natural or synthetic. In particular, advantageously and according to the invention, said composition of particles of lamellar silicate comprises talc particles. Also, advantageously and according to the invention, said composition of particles of lamellar silicate is a composition of talc particles.

Also, advantageously and according to the invention, said paper pulp is prepared from recycled papers. The recycled paper used can originate from the recovery of any type of paper, e.g. office papers, magazine papers, newspapers or cardboards or cardstocks. The proportion of recycled paper added to the prepared paper pulp can vary within very wide limits, especially according to the desired quality of the paper to be produced.

The invention further relates to a process which is characterized in combination by all or some of the characteristics mentioned above or below.

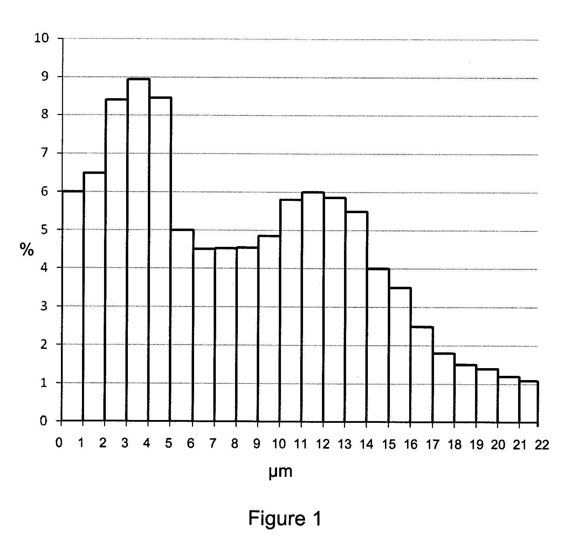

Other objects, characteristics and advantages of the invention are apparent from the following description and the following examples, which refer to Figure 1, showing the curve of particle size distribution of a composition of particles of lamellar silicate used in a process according to the invention.

A composition of particles of lamellar silicate comprising a first, fine fraction of particles of lamellar silicate, whose particles of lamellar silicate have an equivalent spherical diameter of between 0.5 µm and 7 µm, and a second, coarse fraction of particles of lamellar silicate, whose particles of lamellar silicate have an equivalent spherical diameter of between 7 µm and 30 µm, can be used in any type of process for the treatment of a paper pulp. For example, such a composition of particles of lamellar silicate can be added during a process for the production of paper from recycled paper wherein a pulp prepared from recycled papers is successively passed one or more times through sieves, subjected to a first flotation step, named preflotation step, passed at least once through a hydrocyclone, washed at least once with water and then subjected to a second flotation step, named postflotation step. A composition of particles of lamellar silicate comprising a fine fraction and a coarse fraction, as used in a process according to the invention, can be added upstream of a flotation step and/or a step of separation by centrifugation.

### Example 1:

A paper pulp comprising 50% of short lignocellulosic fibres and 50% of long lignocellulosic fibres was prepared and contaminated with sticky labels.

A composition of talc particles (referred to as "bimodal talc") is prepared by mixing a fine talc, whose median diameter D₅₀ is substantially equal to 3 µm, with a coarse talc, whose median diameter D₅₀ is substantially equal to 11 µm. Said fine talc and said coarse talc are each transported by a separate compressed air conveyor, the two conveyors discharging into the same container to produce a mixture of the two talcs. The respective proportions by weight of fine talc and coarse talc are each 50 wt.%, based on the total weight of the talc composition. The particle size distribution of this bimodal talc composition was obtained by gravity sedimentation in accordance with standard AFNOR X11-683 using an apparatus called a SediGraph^{®}, and is shown in Figure 1. In this Figure the percentage by weight (on the ordinate) is shown as a function of the equivalent spherical diameter of the talc particles (on the abscissa) in the form of a histogram. It is noted that the particle size distribution of this composition of talc particles ("bimodal talc") comprises two peaks and is therefore bimodal.

A first part of the paper pulp was treated on the one hand by adding 1.5 wt.% and on the other hand by adding 2.7 wt.% of bimodal talc, based on the total dry weight of the paper pulp.

By way of a comparative example, a second part of the paper pulp was treated on the one hand by adding 1.5 wt.% and on the other hand by adding 2.7 wt.% of fine talc whose median diameter D₅₀ was substantially equal to 3 µm, based on the total dry weight of the paper pulp. Such a fine talc has a unimodal particle size distribution and the following cut-off diameters D₂₅, D₇₅ and D₉₅: D₂₅ = 1.7 µm, D₇₅ = 5.0 µm and D₉₅ = 8.9 µm, a cut-off diameter D₂₅, D₇₅ or D₉₅ of a distribution of particles, especially talc particles, respectively denoting a diameter such that 25 wt.%, 75 wt.% or 95 wt.% of the particles have a size below said diameter. For non-spherical particles the size represents the equivalent spherical diameter (Stokes diameter). All the measurements of cut-off diameters D₂₅, D₇₅ and D₉₅ are carried out by gravity sedimentation in accordance with standard AFNOR X11-683 using an apparatus named a SediGraph^{®}. In addition, such a fine talc does not comprise at least 20 wt.% of a first, fine fraction, whose talc particles have an equivalent spherical diameter of between 0.5 µm and 7 µm, and at least 20 wt.% of a second, coarse fraction, whose talc particles have an equivalent spherical diameter of between 7 µm and 30 µm.

Finally, by way of reference, no talc was added to a third part of the paper pulp.

Each of the paper pulps prepared was treated by passage through a hydrocyclone at a rate of 92 m³/hour. Each of the paper pulps is recovered separately from each of the corresponding compositions loaded with contaminants, rejected by the hydrocyclone.

20 cm x 20 cm sheets of paper, weighing 50 g/m² and having a freeness value of 30 degrees SR (Schopper-Riegler), were prepared from each of the resulting paper pulps treated in this way. Four aluminium sheets 10 cm in diameter are placed on each of the prepared sheets of paper. The sheets of paper are then pressed and dried in contact with the preweighed aluminium sheets. This is done by placing the sheets of paper on a metal heating plate so that the aluminium sheets are in contact with the metal heating plate, which is brought to a temperature of 120°C. The samples are then left to cool to room temperature before the aluminium sheets are carefully separated from the sheets of paper. The aluminium sheets are then weighed to determine their weight increase. The increase in weight of the aluminium sheets is attributed to the contamination of the aluminium sheet by the contaminants contained in the sheet of paper.

The results obtained are shown in Table 1.

**Table 1**

| Talc added to the paper pulp | No talc | Fine talc (D₅₀ = 3 µm) | | Bimodal talc | |
|---|---|---|---|---|---|
| Percentage of talc based on the total dry weight of paper pulp | 0 | 1.5 | 2.7 | 1.5 | 2.7 |
| Mean weight increase of the aluminium sheets (in mg) | 10.90 | 9.50 | 5.20 | 8.30 | 1.70 |

The mean weight increase of the aluminium sheets placed in contact with sheets of paper prepared from a paper pulp containing a bimodal talc is appreciably less than the mean weight increase of the aluminium sheets placed in contact with sheets of paper prepared from a paper pulp containing a fine talc whose median diameter D₅₀ is substantially equal to 3 µm. The contamination is very greatly reduced when using bimodal talc compared with fine talc having a unimodal particle size distribution and not comprising at least 20 wt.% of a first, fine fraction, whose talc particles have an equivalent spherical diameter of between 0.5 µm and 7 µm, and at least 20 wt.% of a second, coarse fraction, whose talc particles have an equivalent spherical diameter of between 7 µm and 30 µm, in particular through adding 2.7 wt.% of bimodal talc to a contaminated paper pulp.

These results show that the use of a talc composition comprising a fine fraction and a coarse fraction according to the invention, having a bimodal particle size distribution, makes it possible significantly to improve the removal of the contaminants initially present in the paper pulp and to neutralize any contaminants that may remain in the paper pulp after passage through a hydrocyclone.

### Example 2:

A contaminated paper pulp with a solids content of 1% was prepared from recycled paper.

A first part of the contaminated paper pulp was treated with a bimodal talc composition as prepared in Example 1, which was added in the form of an aqueous suspension comprising 20 wt.% of bimodal talc, based on the total weight of the suspension. Part of this suspension is added to the paper pulp to be treated so that the percentage by weight of bimodal talc, based on the total dry weight of the paper pulp, is 0.8%.

By way of a comparative example, no talc was added to a second part of the paper pulp.

Each of the prepared paper pulps was subjected to a step of separation by flotation in a VOITH^{®} flotation cell (Ravensburg, Germany) with a capacity of 20 1. Such a flotation cell is equipped with a mixing device and a *"Cowles"* turbine-type device for dispersing air into the paper pulp. The flotation cell also comprises a rotary device for removing a composition loaded with contaminants that accumulates on the surface of the paper pulp in the form of froth during the treatment.

Each of the paper pulps, with the bimodal talc or without talc, is placed in the flotation cell and the mixing device is started. After a mixing time of 3 minutes, the air dispersing (aerating) device is now started. The mixing and aeration are stopped after 8 minutes.

Each of the paper pulps is recovered separately from each of the corresponding compositions loaded with contaminants, which are recovered from the surface of the paper pulp in the flotation cell.

The composition loaded with contaminants which is recovered after treatment of the paper pulp with the bimodal talc, and the composition loaded with contaminants which is recovered after treatment of the paper pulp without talc, are passed through a 150 µm sieve and the recovered contaminants are observed and counted under an optical microscope. The same procedure is adopted with the paper pulp before treatment so as to be able to determine the percentage by number of contaminants removed after such a flotation step.

The results obtained are shown in Table 2.

**Table 2**

| Talc added to the paper pulp | No talc | Bimodal talc |
|---|---|---|
| Percentage of talc based on the total dry weight of paper pulp | 0 | 0.8 |
| Percentage of contaminants removed | 3 | 32 |

It is noted that the use of a bimodal talc during a step of separation by flotation makes it possible significantly to reduce the number of sticky contaminants present in a contaminated paper pulp.

The inventors thus found, from the two examples described above, that the use of a talc composition comprising a fine fraction and a coarse fraction according to the invention, having a bimodal particle size distribution, during a step of separation, for example by centrifugation or flotation, makes it possible both to remove a large proportion of the contaminants initially present in the paper pulp and to neutralize any remaining contaminants.

Without being bound by a particular theory, one explanation of the efficacy of such a bimodal talc could be that it is due to increased removal of the coarsest contaminants because of their densification by the talc particles, particularly the talc particles belonging to the coarse fraction of the bimodal talc acting synergistically with some of the talc particles belonging to the fine fraction of the bimodal talc. The synergistic action of these two talc fractions would afford this increased removal of the contaminants, on passage through the hydrocyclone or during the flotation step, and also the neutralization of the smallest contaminants, which have not been removed and remain in the recovered decontaminated paper pulp, by the talc particles, particularly the talc particles belonging to the fine fraction of the bimodal talc.

The invention can relate to numerous other applications and diverse variants based on the embodiment described above. In particular, the composition of particles of lamellar silicate can comprise fractions of particles of lamellar silicate other than said fine and coarse fractions. Moreover, the particle size distribution of the composition of particles of lamellar silicate used in a process according to the invention can also be unimodal, or plurimodal other than bimodal, e.g. trimodal. Furthermore, the contaminants removed from a paper pulp in a process according to the invention can be of a different chemical nature and origin from those of contaminants originating from sticky labels.

## Claims

1. Process for the treatment of a paper pulp composition, named paper pulp, comprising lignocellulosic materials and contaminating particles, in an aqueous medium, wherein:
- particles of lamellar silicate are added to said paper pulp,
- said paper pulp is subjected to at least one step of separation of the contaminants, so as to separate, at least partially, a composition loaded with contaminants from said paper pulp,
**characterized in that**, in order to add said particles of lamellar silicate to said paper pulp, a composition of particles of lamellar silicate comprising:
- at least 20 wt.% of a first fraction of particles of lamellar silicate, named fine fraction, whose particles of lamellar silicate have an equivalent spherical diameter of between 0.5 µm and 7 µm, and
- at least 20 wt.% of a second fraction of particles of lamellar silicate, named coarse fraction, whose particles of lamellar silicate have an equivalent spherical diameter of between 7 µm and 30 µm,
is added.

2. Process according to Claim 1, **characterized in that** said composition of particles of lamellar silicate has a bimodal particle size distribution.

3. Process according to one of Claims 1 or 2, **characterized in that** said step of separation comprises at least one step of centrifugation of said paper pulp.

4. Process according to one of Claims 1 to 3, **characterized in that** said step of separation comprises at least one step, called flotation step, during which the paper pulp is aerated by the introduction of air bubbles so as to allow the formation, on the surface of the paper pulp, of a composition loaded with contaminants.

5. Process according to one of Claims 1 to 4, **characterized in that** said fine fraction has a median diameter D₅₀ of between 0.5 µm and 6 µm, in particular substantially equal to 3 µm.

6. Process according to one of Claims 1 to 5, **characterized in that** said coarse fraction has a median diameter D₅₀ of between 8 µm and 15 µm, in particular substantially equal to 11 µm.

7. Process according to one of Claims 1 to 6, **characterized in that** said fine fraction and said coarse fraction each represent between 20 wt.% and 80 wt.%, especially between 40 wt.% and 60 wt.% and particularly 50 wt.% of the composition of particles of lamellar silicate.

8. Process according to one of Claims 1 to 7, **characterized in that** between 0.1 wt.% and 20 wt.%, especially between 0.5 wt.% and 7 wt.% and particularly between 1 wt.% and 5 wt.% of said composition of particles of lamellar silicate is added to said paper pulp, based on the total dry weight of said paper pulp.

9. Process according to one of Claims 1 to 8, **characterized in that** said composition of particles of lamellar silicate comprises talc particles.

10. Process according to one of Claims 1 to 9, **characterized in that** said paper pulp is prepared from recycled paper.

## Patentansprüche

1. Verfahren zur Behandlung einer Papierzellstoff-Zusammensetzung, bezeichnet als Papierzellstoff, umfassend Lignocellulose-Materialien und verunreinigende Partikel in einem wässrigen Medium, wobei:
- Partikel von Schichtsilikat dem Papierzellstoff zugegeben werden,
- der Papierzellstoff mindestens einem Schritt des Trennens der Verunreinigungen unterzogen wird, um mindestens teilweise eine Zusammensetzung zu trennen, die mit Verunreinigungen aus dem Zellstoff beladen ist,
**dadurch gekennzeichnet, dass**, um die Partikel aus Schichtsilikat dem Papierzellstoff zuzugeben, eine Zusammensetzung von Partikeln aus Schichtsilikat, umfassend:
- mindestens 20 Gew.% einer ersten Fraktion von Partikeln aus Schichtsilikat, bezeichnet als feine Fraktion, deren Partikel aus Schichtsilikat einen äquivalenten sphärischen Durchmesser von zwischen 0,5 µm und 7 µm, aufweisen, und
- mindestens 20 Gew.% einer zweiten Fraktion von Partikeln aus Schichtsilikat, bezeichnet als grobe Fraktion, deren Partikel aus Schichtsilikat einen äquivalenten sphärischen Durchmesser von zwischen 7 µm und 30 µm, aufweisen, zugegeben wird.

2. Verfahren nach Anspruch 1, **dadurch gekennzeichnet, dass** die Zusammensetzung von Partikeln aus Schichtsilikat eine bimodale Partikelgrößenverteilung aufweist.

3. Verfahren nach einem der Ansprüche 1 oder 2, **dadurch gekennzeichnet, dass** der Schritt des Trennens mindestens einen Schritt des Zentrifugierens des Papierzellstoffs umfasst.

4. Verfahren nach einem der Ansprüche 1 bis 3, **dadurch gekennzeichnet, dass** der Schritt des Trennens mindestens einen Schritt, bezeichnet als Flotationsschritt, umfasst, während dessen der Papierzellstoff durch die Einführung von Luftblasen belüftet wird, um die Bildung, auf der Oberfläche des Papierzellstoffs, einer Zusammensetzung zu ermöglichen, die mit Verunreinigungen beladen ist.

5. Verfahren nach einem der Ansprüche 1 bis 4, **dadurch gekennzeichnet, dass** die feine Fraktion einen mittleren Durchmesser D₅₀ von zwischen 0,5 µm und 6 µm, insbesondere im Wesentlichen gleich 3 µm aufweist.

6. Verfahren nach einem der Ansprüche 1 bis 5, **dadurch gekennzeichnet, dass** die grobe Fraktion einen mittleren Durchmesser D₅₀ von zwischen 8µm und 15 µm, insbesondere im Wesentlichen gleich 11 µm aufweist.

7. Verfahren nach einem der Ansprüche 1 bis 6, **dadurch gekennzeichnet, dass** die feine Fraktion und die grobe Fraktion jeweils zwischen 20 Gew.% und 80 Gew.%, besonders zwischen 40 Gew.% und 60 Gew.% und insbesondere 50 Gew.% der Zusammensetzung von Partikeln aus Schichtsilikat darstellen.

8. Verfahren nach einem der Ansprüche 1 bis 7, **dadurch gekennzeichnet, dass** zwischen 0,1 Gew.% und 20 Gew.%, besonders zwischen 0,5 Gew.% und 7 Gew.% und insbesondere zwischen 1 Gew.% und 5 Gew.% der Zusammensetzung von Partikeln aus Schichtsilikat dem Papierzellstoff zugegeben werden, basierend auf dem gesamten Trockengewicht des Papierzellstoffs.

9. Verfahren nach einem der Ansprüche 1 bis 8, **dadurch gekennzeichnet, dass** die Zusammensetzung von Partikeln aus Schichtsilikat Talkpartikel umfasst.

10. Verfahren nach einem der Ansprüche 1 bis 9, **dadurch gekennzeichnet, dass** der Papierzellstoff aus recyceltem Papier hergestellt wird.

## Revendications

1. Procédé de traitement d'une composition de pâte à papier, appelée pâte à papier, comprenant des matières lignocellulosiques et des particules de contamination, dans un milieu aqueux, dans lequel :
- des particules de silicate lamellaire sont ajoutées à ladite pâte à papier,
- ladite pâte à papier est soumise à au moins une étape de séparation des contaminants, afin d'effectuer une séparation au moins partielle entre une composition chargée avec des contaminants et ladite pâte à papier,
**caractérisé en ce que**, afin d'ajouter lesdites particules de silicate lamellaire à ladite pâte à papier, une composition de particules de silicate lamellaire comprenant :
- au moins 20 % en poids d'une première fraction de particules de silicate lamellaire, appelée fraction fine, dont les particules de silicate lamellaire possèdent un diamètre sphérique équivalent compris entre 0,5 µm et 7 µm, et
- au moins 20 % en poids d'une seconde fraction de particules de silicate lamellaire, appelée fraction grossière, dont les particules de silicate lamellaire possèdent un diamètre sphérique équivalent compris entre 7 µm et 30 µm,
est ajoutée.

2. Procédé selon la revendication 1, **caractérisé en ce que** ladite composition de particules de silicate lamellaire présente une répartition granulométrique bimodale.

3. Procédé selon la revendication 1 ou 2, **caractérisé en ce que** ladite étape de séparation comprend au moins une étape de centrifugation de ladite pâte à papier.

4. Procédé selon l'une quelconque des revendications 1 à 3, **caractérisé en ce que** ladite étape de séparation comprend au moins une étape, appelée étape de flottation, durant laquelle la pâte à papier est aérée par l'introduction de bulles d'air afin de permettre la formation, sur la surface de la pâte à papier, d'une composition chargée avec des contaminants.

5. Procédé selon l'une quelconque des revendications 1 à 4, **caractérisé en ce que** ladite fraction fine présente un diamètre médian D₅₀ compris entre 0,5 µm et 6 µm, en particulier sensiblement égal à 3 µm.

6. Procédé selon l'une quelconque des revendications 1 à 5, **caractérisé en ce que** ladite fraction grossière présente un diamètre médian D₅₀ compris entre 8 µm et 15 µm, en particulier sensiblement égal à 11 µm.

7. Procédé selon l'une quelconque des revendications 1 à 6, **caractérisé en ce que** ladite fraction fine et ladite fraction grossière représentent chacune entre 20 % en poids et 80 % en poids, plus particulièrement entre 40 % en poids et 60 % en poids et en particulier 50 % en poids de la composition de particules de silicate lamellaire.

8. Procédé selon l'une quelconque des revendications 1 à 7, **caractérisé en ce que** entre 0,1 % en poids et 20 % en poids, plus particulièrement entre 0,5 % en poids et 7 % en poids et en particulier entre 1 % en poids et 5 % en poids de ladite composition de particules de silicate lamellaire sont ajoutés à ladite pâte à papier, sur la base du poids sec total de ladite pâte à papier.

9. Procédé selon l'une quelconque des revendications 1 à 8, **caractérisé en ce que** ladite composition de particules de silicate lamellaire comprend des particules de talc.

10. Procédé selon l'une quelconque des revendications 1 à 9, **caractérisé en ce que** ladite pâte à papier est préparée à partir de papier recyclé.
